# EUROPÄISCHE PATENTANMELDUNG

(11) **EP 2 199 757 A1**
(43) Veröffentlichungstag der Anmeldung: **23.06.2010**
(21) Anmeldenummer: 09015290.1
(22) Anmeldetag: 10.12.2009
(51) Int. Cl.: G01F 3/06, G01F 15/00, G01F 15/10, F16K 11/076, F16K 11/085

(54) **Anordnung mit zumindest einer Durchflussmesseinrichtung für Fluide**

(30) Priorität: 22.12.2008 AT 20012008
(71) Anmelder: Kral AG, 6890 Lustenau (AT)
(72) Erfinder: Al Sukhi, Zubeyde, 5415 Nussbaumen (CH); Naier, Martin, 6890 Lustenau (AT); Schneider, Christoph, 88131 Lindau (DE)
(74) Vertreter: Hofmann, Ralf U.

(57) **Zusammenfassung**

Anordnung mit zumindest einer Durchflussmesseinrichtung (1) für Fluide, insbesondere Flüssigkeiten, und mit zumindest einer Bypassleitung (2), über die die Fluide an der Durchflussmesseinrichtung (1) vorbei führbar sind, wobei die Durchflussmesseinrichtung (1) zumindest eine drehbar gelagerte Messspindel (3) aufweist, **dadurch gekennzeichnet, dass** die Anordnung einen Gehäuseblock (4) mit zumindest einer Einströmöffnung (5) und zumindest einer Ausströmöffnung (6) aufweist und innerhalb des Gehäuseblocks (4) die Durchflussmesseinrichtung (1) und die Bypassleitung (2) angeordnet sind und die Einströmöffnung (5) mit der Ausströmöffnung (6) in einem ersten Betriebszustand über die Durchflussmesseinrichtung (1) und in zumindest einem zweiten Betriebszustand über die Bypassleitung (2) verbunden ist. (Fig. 3)

## Beschreibung

Die vorliegende Erfindung betrifft eine Anordnung mit zumindest einer Durchflussmesseinrichtung für Fluide, insbesondere Flüssigkeiten, und mit zumindest einer Bypassleitung, über die die Fluide an der Durchflussmesseinrichtung vorbei führbar sind, wobei die Durchflussmesseinrichtung zumindest eine drehbar gelagerte Messspindel aufweist.

Bei gattungsgemäßen Anordnungen werden bei den Durchflussmesseinrichtungen bzw. Volumetern als Messorgane ein, zwei oder mehr Messspindeln eingesetzt. Solche Durchflussmesseinrichtungen sind sehr genau und arbeiten nach einem transparenten und nachvollziehbaren Messprinzip, indem der Durchfluss aus der Anzahl der Umdrehungen der Messspindel(n) berechnet wird. Ein weiterer Vorteil dieses Typs von Durchflussmesseinrichtung ist die schlanke Bauweise und die Verursachung nur geringer Druckverluste. Ein Problem bei solchen Durchflussmesseinrichtungen ist es, dass es durch Verschmutzungen oder dgl. relativ rasch zum Blockieren der Messspindeln kommen kann. Daher müssen gattungsgemäße Anordnungen immer eine Bypassleitung aufweisen, über die die Fluide bzw. Flüssigkeiten an der dann blockierten Durchflussmesseinrichtung vorbeiführbar sind. Die Notwendigkeit des Vorsehens solcher Bypassleitungen relativiert beim Stand der Technik allerdings wiederum die schlanke Bauweise der Durchflussmesseinrichtungen an sich, zumal wenn man bedenkt, dass zum Schalten von Bypassleitungen und Durchflussmesseinrichtungen beim Stand der Technik zusätzliche Ventile vorgesehen sein müssen.

Aufgabe der Erfindung ist es, für gattungsgemäße Anordnungen eine Lösung zu schaffen, die trotz der Notwendigkeit einer Bypassleitung eine kleine bzw. schlanke Bauweise der Anordnung ermöglicht.

Dies wird erreicht, indem die Anordnung einen Gehäuseblock mit zumindest einer Einströmöffnung und zumindest einer Ausströmöffnung aufweist und innerhalb des Gehäuseblocks die Durchflussmesseinrichtung und die Bypassleitung angeordnet sind und die Einströmöffnung mit der Ausströmöffnung in einem ersten Betriebszustand über die Durchflussmesseinrichtung und in zumindest einem zweiten Betriebszustand über die Bypassleitung verbunden ist.

Ein Grundgedanke der Erfindung ist es somit, einen Gehäuseblock vorzusehen, in den sowohl die Bypassleitung als auch die Durchflussmesseinrichtung integriert ist. Bypassleitung und Durchflussmesseinrichtung sind somit gemeinsam im Gehäuseblock angeordnet. Dies ermöglicht die gewünschte kompakte Bauweise. In einem ersten Betriebszustand ermöglicht es die erfindungsgemäße Anordnung Einströmöffnung und Ausströmöffnung des Gehäuseblocks über die Durchflussmesseinrichtung miteinander zu verbinden. In einem zweiten Betriebszustand, wenn die Durchflussmesseinrichtung nicht betriebsbereit ist oder aus anderen Gründen umgangen werden soll, kann die Einströmöffnung des Gehäuseblocks über die Bypassleitung direkt mit der Ausströmöffnung verbunden sein.

Die Durchflussmesseinrichtung weist, wie beim Stand der Technik an sich bekannt, als Messorgan vorzugsweise nicht nur eine, sondern zumindest zwei, eventuell aber auch drei oder mehr drehbar gelagerte und ineinander greifende Messspindeln auf. Der Gehäuseblock ist bevorzugt einstückig, besonders bevorzugt als einstückiges Gussteil, ausgebildet. Das zwischen Einströmöffnung und Ausströmöffnung im Gehäuseblock vorhandene Leitungssystem ist günstigerweise als eine strömungstechnisch miteinander verbundene Abfolge von Hohlräumen und/oder Bohrungen im ansonsten, vorzugsweise zumindest im Wesentlichen, massiven Gehäuseblock ausgebildet. Um zwischen dem ersten und dem zweiten Betriebszustand umschalten zu können, ist günstigerweise zumindest ein von Hand und/oder motorisch zu betätigendes Schaltorgan innerhalb des Gehäuseblocks angeordnet, wobei das Schaltorgan die Einströmöffnung mit der Ausströmöffnung im ersten Betriebszustand über die Durchflussmesseinrichtung und im zweiten Betriebszustand über die Bypassleitung verbindet. Im Sinne einer kompakten und einfach bedienbaren Anordnung sehen besonders bevorzugte Ausgestaltungsformen der Erfindung vor, dass es sich um genau ein Schaltorgan innerhalb des Gehäuseblocks handelt.

Mittels dieses Schaltorgans kann somit vom Bedienpersonal zu frei wählbaren bzw. gewünschten Zeitpunkten oder von einer automatisierten Überwachungsvorrichtung zwischen dem ersten Betriebszustand und dem zweiten Betriebszustand umgeschaltet werden.

Für den Fall, dass es zu einer unvorhergesehenen Blockade oder Verstopfung der Durchflussmesseinrichtung kommt, sieht eine bevorzugte Ausgestaltungsform der Erfindung vor, dass innerhalb des Gehäuseblocks eine Zusatzbypassleitung angeordnet ist, über die die Fluide an der Durchflussmesseinrichtung vorbeiführbar sind. Diese Zusatzbypassleitung zweigt, vorzugsweise in Strömungsrichtung der Fluide gesehen, zwischen der Einströmöffnung und der Durchflussmesseinrichtung von einem zur Durchflussmesseinrichtung führenden Leitungsabschnitt ab und führt zur Ausströmöffnung. In der Zusatzbypassleitung ist günstigerweise ein Überdruckventil angeordnet, welches vom die Anordnung bzw. den Gehäuseblock durchströmenden Fluid bei Überschreitung eines, vorzugsweise einstellbaren, Überdruckschwellwertes geöffnet wird.

Der Vollständigkeit halber sei darauf hingewiesen, dass ein solches Überdruckventil natürlich nicht zwingend in einer Zusatzbypassleitung sondern auch direkt in der in Patentanspruch 1 erwähnten Bypassleitung angeordnet sein kann. Bei solchen Ausgestaltungsformen kann, z. B. wenn dies nicht von Nöten ist, auf das von Hand und/oder motorisch zu betätigende Schaltorgan verzichtet werden.

Eine besonders bevorzugte Ausgestaltungsform der Erfindung sieht vor, dass innerhalb des Gehäuseblocks ein die Einströmöffnung mit der Ausströmöffnung verbindendes Leitungssystem in zumindest zwei, vorzugsweise übereinander angeordneten, Etagen ausgebildet ist. Bevorzugt ist dabei vorgesehen, dass die Einströmöffnung und die Ausströmöffnung gemeinsam in einer Etage angeordnet sind. Ebenso ist es günstig, wenn die Bypassleitung und das Schaltorgan gemeinsam in einer Etage angeordnet sind, wobei besonders bevorzugte Ausgestaltungsformen vorsehen, dass die Einströmöffnung und die Ausströmöffnung und die Bypassleitung und das Schaltorgan gemeinsam in einer Etage angeordnet sind. In der anderen Etage ist dann günstigerweise die Durchflussmesseinrichtung, bevorzugt gemeinsam mit einem in der Zusatzbypassleitung angeordneten Überdruckventil, angeordnet. Durch die etagenartige Bauweise ergibt sich eine besonders kompakte Anordnung.

Weitere Merkmale und Einzelheiten bevorzugter Ausgestaltungsformen der vorliegenden Erfindung ergeben sich aus der nachfolgenden Figurenbeschreibung. Es zeigen:
- Fig. 1: eine Anordnung gem. des Standes der Technik in schematisierter Darstellung
- Fig. 2: ein erfindungsgemäßes Ausführungsbeispiel mit Gehäuseblock in einer Außenansicht
- Fig. 3: das erfindungsgemäße Ausführungsbeispiel gem. Fig. 2 in einer Explosionsdarstellung
- Fig. 4 und 5: Darstellungen des im Gehäuseblock vorgesehenen Leitungssystems
- Fig. 6 bis 8: die Durchströmung des erfindungsgemäßen Ausführungsbeispiels gem. Fig. 2 im ersten Betriebszustand
- Fig. 9 und 10: die Durchströmung des erfindungsgemäßen Ausführungsbeispiels gem. Fig. 2 im zweiten Betriebszustand
- Fig. 11 und 12: die Durchströmung des erfindungsgemäßen Ausführungsbeispiels gem. Fig. 2 in einem dritten Betriebszustand
- Fig. 13: eine erfindungsgemäße Alternative in Form einer Erweiterung des Ausführungsbeispiels gem. Fig. 2.

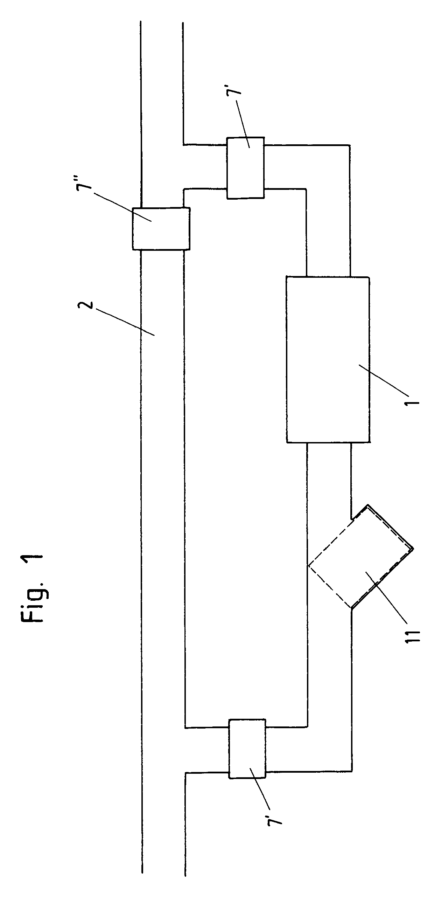

In Fig. 1 ist beispielhaft der Stand der Technik dargestellt. Im Normalbetrieb sind die Schaltorgane 7' geöffnet und das Schaltorgan 7" geschlossen. Das Fluid bzw. die Flüssigkeit strömt durch den Schmutzfänger 11 hindurch zur Durchflussmesseinrichtung 1. Sind der Schmutzfänger 11 und/oder die Durchflussmesseinrichtung 1 blockiert, so müssen von Hand oder motorisch betrieben die Schaltorgane 7' geschlossen und das Schaltorgan 7" geöffnet werden, so dass das Fluid bzw. die Flüssigkeit an der Durchflussmesseinrichtung 1 vorbei durch die Bypassleitung 2 strömen kann. Obwohl die Durchflussmesseinrichtung 1 in der Regel sehr klein und schlank gebaut ist, hat die Anordnung aufgrund der Notwendigkeit der Bypassleitung insgesamt doch eine erhebliche Größe und ein erhebliches Gewicht.

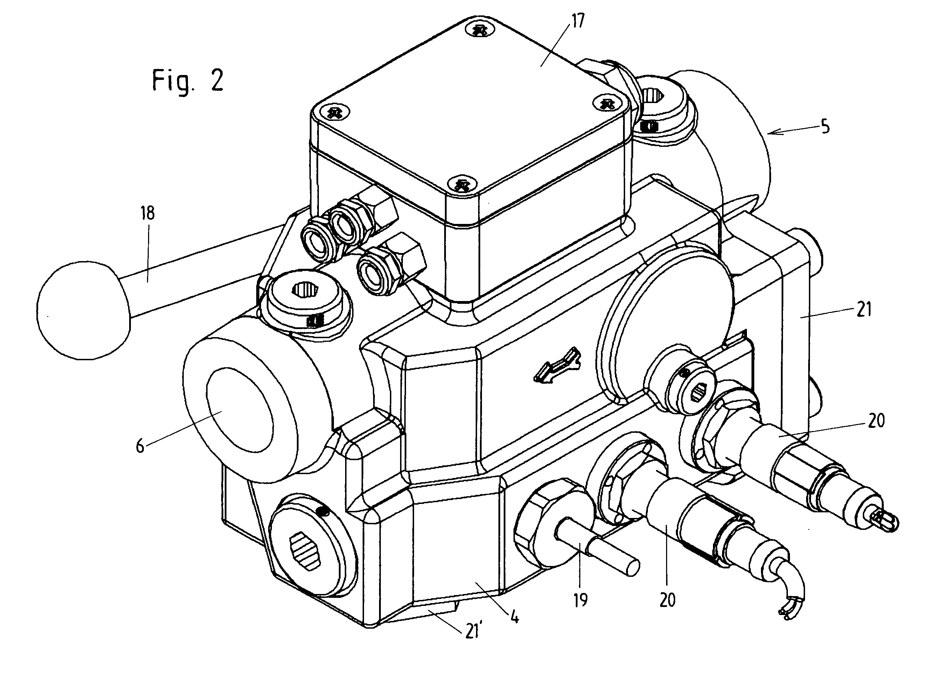

Um diesen Nachteil des Standes der Technik zu beseitigen, wird ein Gehäuseblock 4 mit zumindest einer Einströmöffnung 5 und zumindest einer Ausströmöffnung 6 vorgeschlagen, wobei innerhalb des Gehäuseblocks 4 die Durchflussmesseinrichtung 1 und die Bypassleitung 2 sozusagen gemeinsam angeordnet sind und die Einströmöffnung 5 mit der Ausströmöffnung 6 in einem ersten Betriebszustand über die Durchflussmesseinrichtung 1 und in zumindest einem zweiten Betriebszustand über die Bypassleitung 2 verbunden ist. Eine solche erfindungsgemäße Anordnung ist in einer Außenansicht in Fig. 2 dargestellt. Das Fluid, insbesondere die Flüssigkeit, strömt über die Einströmöffnung 5 in den Gehäuseblock 4 ein und verlässt diesen Gehäuseblock 4 über die Ausströmöffnung 6. Einströmöffnung 5 und Ausströmöffnung 6 sind günstigerweise, wie in Fig. 2 gezeigt, koaxial zueinander im Gehäuseblock 4 angeordnet. Mittels des Handbedienhebels 18 kann ein in den folgenden Figuren dargestelltes Schaltorgan 7 verstellt werden, um den ersten Betriebszustand einzustellen, bei dem die Einströmöffnung 5 über die in den folgenden Figuren explizit dargestellte Durchflussmesseinrichtung 1 mit der Ausströmöffnung 6 verbunden ist. Durch Umlegen des Handbedienhebels 18 wird die erfindungsgemäße Anordnung in einen zweiten Betriebszustand gebracht, bei dem Einströmöffnung 5 und Ausströmöffnung 6 über die in den folgenden Figuren noch explizit dargestellte Bypassleitung 2 verbunden sind. Von außen zu sehen sind neben den bereits genannten Bauteilen der Temperatursensor 19, die Impulsgeber 20 der Durchflussmesseinrichtung 1, der Deckel 21 sowie die Verschlussschrauben 41 bis 43 und der optional vorhandene Schaltkasten 17, welcher für das Anschließen der Impulsgeber 20 und des optionalen Temperatursensors 19 vorgesehen sein kann.

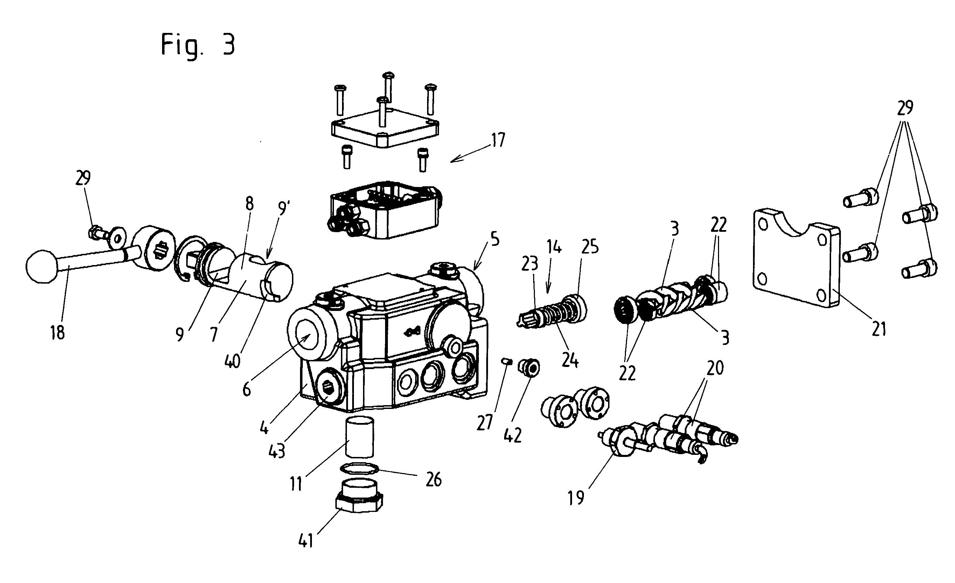

In Fig. 3 sind die im zusammengebauten Zustand gemäß Fig. 2 von außen nicht zu sehenden Einbauten des Gehäuseblocks 4 in einer Explosionsdarstellung dargestellt. Zunächst einmal ist hier auf das drehfest mit dem Handbedienhebel 18 verbundene Schaltorgan 7 zu verweisen. Dieses ist im gezeigten Ausführungsbeispiel als innerhalb des Gehäuseblocks 4 drehbar gelagerte Walze ausgebildet. In der Walze sind zwei orthogonal zueinander verlaufend angeordnete und durch zumindest eine Zwischenwand 8 vollständig voneinander getrennte Durchströmkanäle 9 und 9' angeordnet. Anstelle der orthogonalen Anordnung der Durchströmkanäle können diese auch schräg, also weder parallel noch orthogonal zueinander verlaufend angeordnet sein. Die Funktionsweise des Schaltorgans und der Durchströmkanäle 9 und 9' wird weiter unten anhand der noch folgenden Figuren erläutert. Anstelle des Handbedienhebels 18 kann natürlich auch eine an sich bekannte motorische Betätigung des Schaltorgans 7 vorgesehen sein. Im gezeigten Ausführungsbeispiel ist jedenfalls vorgesehen, dass das Schaltorgan 7 um 90° um seine Längsachse gedreht werden kann. Der von der Verschlussschraube 42 im Gehäuseblock 4 gehaltene Anschlagstift 27 greift in eine nutförmige Ausnehmung 40 des Schaltorgans 7 ein und begrenzt dadurch die möglichen Stellungen des Schaltorgans 7 auf den gewünschten Winkelbereich von 90°.

Als Messorgan der Durchflussmesseinrichtung 1 sind im gezeigten Ausführungsbeispiel zwei Spindeln 3 vorgesehen, welche mittels der Lager 22 drehbar im Gehäuseblock 4 gelagert sind und, vorzugsweise gegeneinander abdichtend, ineinander greifen. Das Messprinzip dieser ineinander greifenden Spindeln ist beim Stand der Technik an sich bekannt und muss nicht weiter erläutert werden. Über die Impulsgeber 20 wird, wie an sich ebenfalls bekannt, die Umdrehungszahl der Spindeln 3 gemessen, indem die Impulsgeber registrieren, wann und wie oft sie mit den schraubenförmigen Gewindezügen der Spindel(n) 3 in Kontakt kommen. Über eine an sich bekannte Auswertemimik kann daraus die Drehzahl der Spindeln 3 und damit das Durchflussvolumen berechnet werden. Die Impulsgeber 20 sind im gezeigten Ausführungsbeispiel, ebenso wie der optionale Temperatursensor 19 als auswechselbare Einschub- bzw. Einschraubkörper ausgebildet.

Der Durchflussmesseinrichtung 1 vorgeschaltet ist ein Schmutzfänger 11. Dieser wird von der Verschlussschraube 41 im Gehäuseblock 4 gehalten und dient dazu, das Eindringen von Schmutzpartikeln in die Durchflussmesseinrichtung 1 zu unterbinden. Als Schmutzfänger 11 können beim Stand Technik an sich bekannte, z.B. röhrenförmige Siebe oder andere Filter eingesetzt werden.

Ebenfalls als Einschubkörper ist das Überdruckventil 14 ausgestaltet. Es weist einen Ventilkörper 23 auf, welcher von einer Feder 24 gegen einen Ventilsitz im Gehäuseblock 4 gedrückt wird. Der Betrag der Kraft, welche den Ventilkörper 23 gegen den Ventilsitz drückt, kann mittels der Stellschraube 25 eingestellt werden. Durch Verstellen der Stellschraube 25 wird die Feder 24 mehr oder weniger stark vorgespannt. Während die Durchflussmesseinrichtung 1 bzw. deren Messspindeln 3 und Lager 22 in einem weiter unten noch gezeigten Aufnahmeraum 33 im Gehäuseblock 4 angeordnet werden, wird das Überdruckventil 14 im gezeigten Ausführungsbeispiel in die in den nachfolgenden Figuren noch gezeigte Zusatzbypassleitung 12 eingebaut. Sowohl das Überdruckventil 14 also auch die Messspindeln 3 und deren Lager 22 können durch entsprechende seitliche Öffnungen im Gehäuseblock 4 in diesen eingeschoben werden. Diese Öffnungen werden dann mittels des Deckels 21 verschlossen, indem dieser mit Schrauben 29 an den Gehäuseblock 4 geschraubt wird. Die Verschlussschraube 43 verschließt eine, dem Deckel 21 entgegengesetzt liegende Öffnung im Gehäuseblock 4.

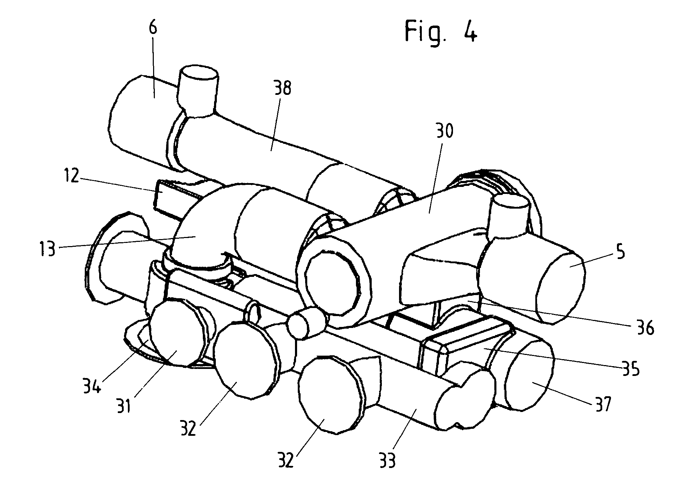

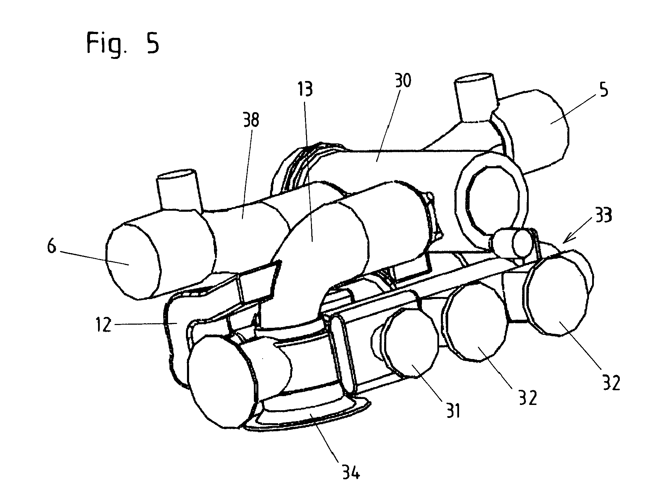

Fig. 4 und 5 zeigen zur Erläuterung perspektivische Darstellungen der Außenkonturen des im Inneren des Gehäuseblocks 4 angeordneten Leitungssystems. Die Fluide treten durch die Einströmöffnung 5 ein und werden unmittelbar dem Aufnahmeraum 30 für das Schaltorgan 7 zugeführt. Von dort gibt es, je nach Stellung des Schaltorgans 7, zwei verschiedene Möglichkeiten, wie das Fluid weiter strömen kann. Zum einen ist das Schaltorgan 7 in der zweiten Betriebsstellung so geschaltet, dass das Fluid unmittelbar von der Einströmöffnung 5 kommend durch den Durchströmkanal 9 zur Ausströmleitung 38 und damit zur Ausströmöffnung 6 strömen kann, womit es den Gehäuseblock 4 wieder verlässt. In dieser zweiten Betriebsstellung wird die Durchflussmesseinrichtung 1 somit umgangen und nicht durchströmt. Befindet sich das Schaltorgan 7 in seiner zweiten Stellung, so passiert das von der Einströmöffnung 5 kommende Fluid das im Aufnahmeraum 30 sich befindende Schaltorgan 7 durch den Durchströmkanal 9' hin zum Leitungsabschnitt 13. Dieser Leitungsabschnitt 13 führt zum Aufnahmeraum für den Schmutzfänger 11, in den der Schmutzfänger durch die Öffnung 34 eingeschoben werden kann. An den Aufnahmeraum für den Schmutzfänger 11 schließt der Aufnahmeraum 33 für die Durchflussmesseinrichtung 1 an. In diesen Aufnahmeraum 33 münden die Öffnungen 32 für die Impulsgeber 20 und die Öffnung 31 für den Temperatursensor 19. Beim Durchtritt durch den Aufnahmeraum 33 strömt das Fluid zwangsweise durch die Messspindeln 3 der Durchflussmesseinrichtung 1, wodurch diese gedreht werden, was wiederum mit den Impulsgebern 20 gemessen bzw. aufgewertet wird. Am Ende des Aufnahmeraums 33 strömt das Fluid anschließend über die Verbindungsleitung 35 in die Kammer 37 und von dort über die Verbindungsleitung 36 wieder hin zum Aufnahmeraum 30 für das Schaltorgan 7. Dort passiert es den Durchströmkanal 9 des Schaltorgans 7 und wird dann der Ausströmleitung 38 und damit der Ausströmöffnung 6 zugeführt.

Wie besonders gut in Fig. 5 zu sehen, zweigt vom Leitungsabschnitt 13 die Zusatzbypassleitung 12 ab. Die Stelle dieser Abzweigung liegt zwischen der Einströmöffnung 5 bzw. dem Aufnahmeraum 30 und dem Aufnahmeraum 33 für die Durchflussmesseinrichtung 1 bzw. dem vorgeschalteten Aufnahmeraum für den Schmutzfänger 11. In der Zusatzbypassleitung 12 ist, wie bereits erwähnt, das Überdruckventil 14 angeordnet. Die Zusatzbypassleitung 12 mündet wiederum in die Kammer 37. Aus dieser führt die Verbindungsleitung 36 über den Aufnahmeraum 30 für das Schaltorgan 7 zur Ausströmleitung 38 und damit zur Ausströmöffnung 6.

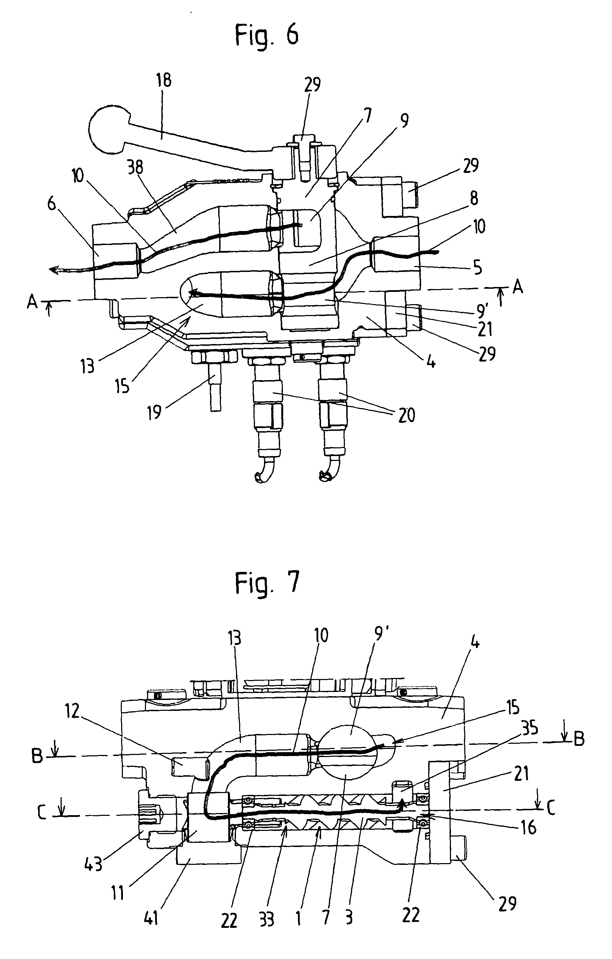

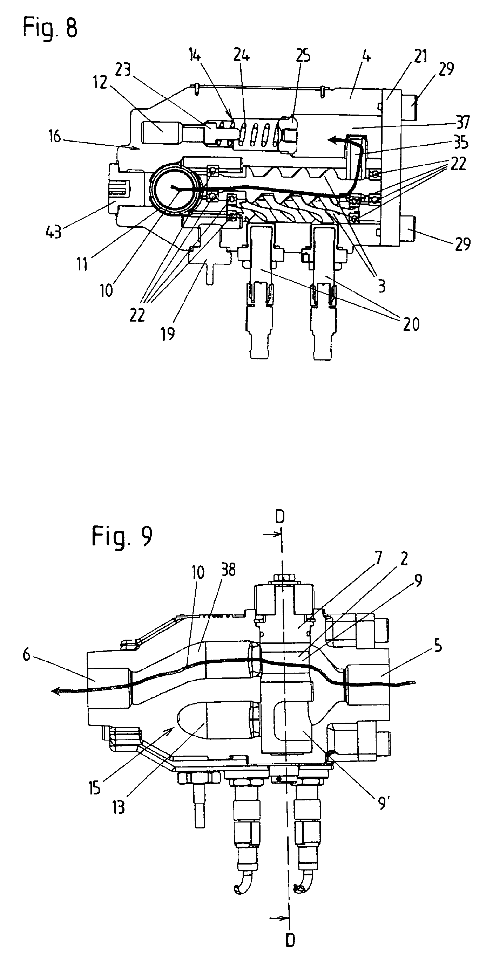

Anhand der Fig. 6 bis 8 wird nun das Durchströmen des Gehäuseblocks 4 bzw. der gesamten Anordnung im ersten Betriebszustand anhand von drei Schnittdarstellungen veranschaulicht. Fig. 6 zeigt einen Horizontalschnitt durch die obere Etage 15 des Gehäuseblocks 4, Fig. 7 zeigt einen Vertikalschnitt entlang der in Fig. 6 gezeigten Schnittlinie AA. In Fig. 7 sind wiederum die Schnittlinien BB des Schnittes gem. Fig. 6 und die Schnittlinie CC des Schnittes durch die untere Etage 16, wie er in Fig. 8 dargestellt ist, eingezeichnet. Die Fig. 6 bis 8 veranschaulichen die Situation der ersten Betriebsstellung, bei der das Fluid nicht durch die Bypassleitung 2 oder die Zusatzbypassleitung 12 sondern durch die Durchflussmesseinrichtung 1 strömt. Der Anschaulichkeit halber sind die Strömungsrichtungen als Pfeile 10 eingezeichnet. In dieser ersten Betriebsstellung strömt das einströmende Fluid von der Einströmöffnung 5 über den entsprechend gestellten Durchströmkanal 9' zum Leitungsabschnitt 13. All dies geschieht in der oberen Etage 15, welche in Fig. 6 dargestellt ist. Fig. 7 zeigt, wie das Fluid anschließend, dem Leitungsabschnitt 13 folgend, in der unteren Etage 16 dem Schmutzfänger 11 zugeführt wird. In diesem werden eventuell vorhandene Schwebstoffe und andere Verschmutzungen aus dem Fluid ausgefiltert. Der Schmutzfänger 11 ist zu diesem Zweck im gezeigten Ausführungsbeispiel rohrförmig ausgestaltet. Durch Entfernen der Verschlussschraube 41 kann er gereinigt werden.

Vom Schmutzfänger 11 kommend tritt das Fluid in den Aufnahmeraum 33, in dem die Durchflussmesseinrichtung 1 angeordnet ist. Das Fluid strömt an den Messspindeln 3 vorbei, wodurch diese entsprechend der Durchflussmenge gedreht werden, was wiederum von den beiden Impulsgebern 22 registriert wird. Am Ende der Messspindeln 3 strömt das Fluid in die Verbindungsleitung 35 und von dort in die Kammer 37, wie dies besonders gut in Fig. 8 zu sehen ist. Von dort aus verlässt das Fluid die untere Etage 16 und tritt, wie besonders gut in Fig. 6 zu sehen, durch den entsprechend gestellten Durchströmkanal 9 in die Ausströmleitung 38 ein und wird von dort der Ausströmöffnung 6 des Gehäuseblocks 4 zugeführt. In der anhand der Fig. 6 bis 8 geschilderten ersten Betriebsstellung wird somit das gesamte, durch die Einströmöffnung 5 eintretende Fluid durch die Messeinrichtung 1 hindurchgeführt, womit der gesamte Volumenstrom gemessen wird.

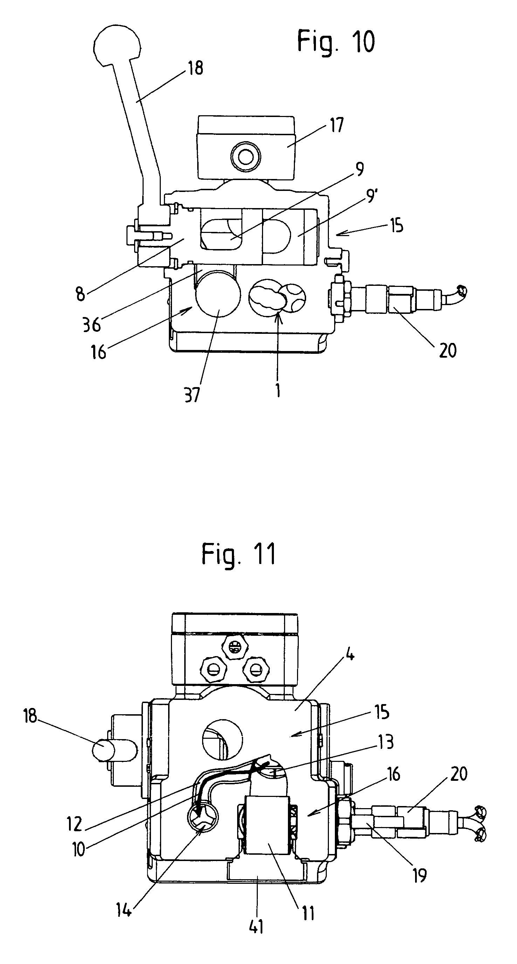

Die Fig. 9 und 10 zeigen nun den zweiten Betriebszustand, bei dem die Einströmöffnung 5 mit der Ausströmöffnung 6 über die Bypassleitung 2 verbunden ist. Das Schaltorgan 7 ist dabei so gestellt, dass der Durchströmkanal 9' so geschwenkt ist, dass kein Fluid in den Leitungsabschnitt 13 einströmen kann. Sämtliches, in die Einströmöffnung 5 eintretendes Fluid wird durch den Durchströmkanal 9 direkt der Ausströmleitung 38 und damit der Ausströmöffnung 6 zugeführt. Der entsprechend gestellte Durchströmkanal 9 bildet dabei den Bypass 2. In diesem Betriebszustand durchströmt das Fluid den Gehäuseblock 4 somit ausschließlich in der oberen Etage 15. Kein Fluid gelangt in die untere Etage 16. Fig. 9 zeigt die Schnittlinie DD des Vertikalschnitts der Fig. 10.

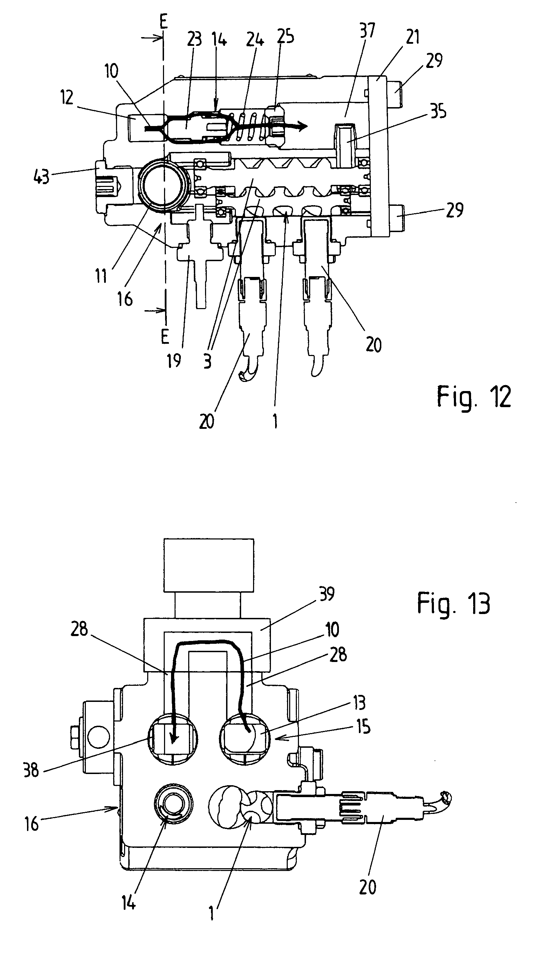

Die Fig. 11 und 12 veranschaulichen einen dritten Betriebszustand. In diesem ist das Schaltorgan 7, wie in Fig. 6 gezeigt, gestellt, so dass der Bypass 2 blockiert ist. Das Fluid strömt zunächst von der Einströmöffnung 5 kommend über den sich in Öffnungsstellung befindenden Durchströmkanal 9' zum Leitungsabschnitt 13. Dort staut sich das Fluid allerdings im dritten Betriebszustand aufgrund eines zugesetzten Schmutzfängers 11 oder von blockierten Messspindeln 3, so dass es nicht mehr den im ersten Betriebszustand vorgesehenen Strömungsweg fortsetzen kann. Sobald der sich in dieser Situation im Fluid aufbauende Druck den mittels der Stellschraube 25 einstellbaren Überdruckschwellwert des Überdruckventils 14 überschreitet, wird der Ventilkörper 23 unter Zusammendrücken der Feder 24 von seinem Ventilsitz abgehoben, wodurch Fluid, wie in Fig. 12 dargestellt, am nun sich in der Öffnungsstellung befindenden Ventilkörper 23 vorbei, durch eine zentrale Öffnung in der Stellschraube 25 hindurch, in die Kammer 37 strömen kann. Von dort kann das Fluid dann ungehindert durch die Verbindungsleitung 36 wieder in die obere Etage bzw. durch den, wie in Fig. 6 gezeigt, gestellten Durchströmkanal 9 hindurch zur Abströmleitung 38 und damit Ausströmöffnung 6 gelangen. In diesem dritten Betriebszustand ist somit zwar der Bypass 2 geschlossen. Wenn sich aufgrund eines entsprechend verschmutzten Schmutzfängers 11 oder von blockierten Messspindeln 3 aber ein entsprechender Druck im Fluid aufbaut, kann das Fluid über das Überdruckventil 14 abströmen. Hierdurch wird eine entsprechende Überdrucksicherung geschaffen. Fig. 11 zeigt den Schnitt entlang der in Fig. 12 dargestellten Schnittlinie EE.

Fig. 13 zeigt noch eine Erweiterung des bisher geschilderten erfindungsgemäßen Ausführungsbeispiels. Bei dieser Erweiterung ist zusätzlich zu dem von Hand betätigbaren Schaltorgan 7 zur Öffnung einer zusätzlichen Leitung 28 ein weiteres Schaltorgan 39 vorgesehen, welches elektrisch oder anderweitig ferngesteuert geöffnet und geschlossen werden kann. Über die zusätzlichen Leitungen 28 ist dieses weitere Schaltorgan 39 einerseits mit dem Leitungsabschnitt 13 und andererseits mit der Ausströmleitung 38 verbunden. Befindet sich nun das von Hand zu betätigende Schaltorgan 7 in der Stellung des ersten Betriebszustandes gem. Fig. 6, so kann durch Öffnen des weiteren Schaltorgans 39 ein weiterer Bypass über die zusätzlichen Leitungen 28 geöffnet werden. Bei geschlossenem weiterem Schaltorgan 39 ist dieser zusätzliche Bypass nicht aktiv, die zusätzlichen Leitungen 28 sind geschlossen. Diese zusätzliche, insbesondere fernsteuerbare Bypassmöglichkeit durch das weitere Schaltorgan 39 kann bei Einsatzgebieten der erfindungsgemäßen Anordnung von Interesse sein, wenn das Schaltorgan 7 nur von Hand, also vor Ort, betätigt werden kann und man zusätzlich eine von der Ferne aus schaltbare Bypassmöglichkeit benötigt.

### Legende

### zu den Hinweisziffern:

- 1: Durchflussmesseinrichtung
- 2: Bypassleitung
- 3: Messspindel
- 4: Gehäuseblock
- 5: Einströmöffnung
- 6: Ausströmöffnung
- 7,7',7": Schaltorgan
- 8: Zwischenwand
- 9,9': Durchströmkanal
- 10: Strömungsrichtung
- 11: Schmutzfänger
- 12: Zusatzbypassleitung
- 13: Leitungsabschnitt
- 14: Überdruckventil
- 15: Etage
- 16: Etage
- 17: Schaltkasten
- 18: Handbedienhebel
- 19: Temperatursensor
- 20: Impulsgeber
- 21: Deckel
- 22: Lager
- 23: Ventilkörper
- 24: Feder
- 25: Stellschraube
- 26: Dichtungsring
- 27: Anschlagstift
- 28: zusätzliche Leitungen
- 29: Schraube
- 30: Aufnahmeraum
- 31: Öffnung
- 32: Öffnung
- 33: Aufnahmeraum
- 34: Öffnung
- 35: Verbindungsleitung
- 36: Verbindungsleitung
- 37: Kammer
- 38: Ausströmleitung
- 39: weiteres Schaltorgan
- 40: nutförmige Ausnehmung
- 41: Verschlussschraube
- 42: Verschlussschraube
- 43: Verschlussschraube

## Patentansprüche

1. Anordnung mit zumindest einer Durchflussmesseinrichtung (1) für Fluide, insbesondere Flüssigkeiten, und mit zumindest einer Bypassleitung (2), über die die Fluide an der Durchflussmesseinrichtung (1) vorbei führbar sind, wobei die Durchflussmesseinrichtung (1) zumindest eine drehbar gelagerte Messspindel (3) aufweist, **dadurch gekennzeichnet, dass** die Anordnung einen Gehäuseblock (4) mit zumindest einer Einströmöffnung (5) und zumindest einer Ausströmöffnung (6) aufweist und innerhalb des Gehäuseblocks (4) die Durchflussmesseinrichtung (1) und die Bypassleitung (2) angeordnet sind und die Einströmöffnung (5) mit der Ausströmöffnung (6) in einem ersten Betriebszustand über die Durchflussmesseinrichtung (1) und in zumindest einem zweiten Betriebszustand über die Bypassleitung (2) verbunden ist.

2. Anordnung nach Anspruch 1, **dadurch gekennzeichnet, dass** die Durchflussmesseinrichtung (1) zumindest zwei drehbar gelagerte und ineinander greifende Messspindeln (3) aufweist.

3. Anordnung nach Anspruch 1 oder 2, **dadurch gekennzeichnet, dass** der Gehäuseblock (4) einstückig, vorzugsweise als einstückiges Gussteil, ausgebildet ist.

4. Anordnung nach einem der Ansprüche 1 bis 3, **dadurch gekennzeichnet, dass** zumindest ein, vorzugsweise genau ein, von Hand und/oder motorisch zu betätigendes Schaltorgan (7) innerhalb des Gehäuseblocks (4) angeordnet ist, wobei das Schaltorgan (7) die Einströmöffnung (5) mit der Ausströmöffnung (6) im ersten Betriebszustand über die Durchflussmesseinrichtung (1) und im zweiten Betriebszustand über die Bypassleitung (2) verbindet.

5. Anordnung nach Anspruch 4, **dadurch gekennzeichnet, dass** das Schaltorgan (7) als innerhalb des Gehäuseblocks (4) drehbar gelagerte Walze ausgebildet ist.

6. Anordnung nach Anspruch 5, **dadurch gekennzeichnet, dass** in der Walze zwei schräg, vorzugsweise orthogonal, zueinander verlaufend angeordnete und/oder durch zumindest eine Zwischenwand (8) vollständig voneinander getrennte Durchströmkanäle (9,9) angeordnet sind.

7. Anordnung nach einem der Ansprüche 1 bis 6, **dadurch gekennzeichnet, dass**, vorzugsweise in Strömungsrichtung (10) der Fluide gesehen, zwischen der Einströmöffnung (5) und der Durchflussmesseinrichtung (1) innerhalb des Gehäuseblocks (4) ein, vorzugsweise als auswechselbarer Einschubkörper ausgebildeter, Schmutzfänger (11) angeordnet oder anordenbar ist.

8. Anordnung nach einem der Ansprüche 1 bis 7, **dadurch gekennzeichnet, dass** eine Zusatzbypassleitung (12), über die die Fluide an der Durchflussmesseinrichtung (1) vorbei führbar sind, innerhalb des Gehäuseblocks (4) angeordnet ist, wobei die Zusatzbypassleitung (12), vorzugsweise in Strömungsrichtung (10) der Fluide gesehen, zwischen der Einströmöffnung (5) und der Durchflussmesseinrichtung (1) von einem zur Durchflussmesseinrichtung (1) führenden Leitungsabschnitt (13) abzweigt und zur Ausströmöffnung (6) führt und wobei in der Zusatzbypassleitung (12) ein vom Fluid bei Überschreitung eines, vorzugsweise einstellbaren, Überdruckschwellwertes öffenbares Überdruckventil (14) angeordnet ist.

9. Anordnung nach Anspruch 7 und 8, **dadurch gekennzeichnet, dass** die Zusatzbypassleitung (12), vorzugsweise in Strömungsrichtung (10) der Fluide gesehen, zwischen der Einströmöffnung (5) und dem Schmutzfänger (11) abzweigt.

10. Anordnung nach einem der Ansprüche 1 bis 9, **dadurch gekennzeichnet, dass** die Einströmöffnung (5) und die Ausströmöffnung (6) koaxial zueinander im Gehäuseblock (4) angeordnet sind.

11. Anordnung nach einem der Ansprüche 1 bis 10, **dadurch gekennzeichnet, dass** innerhalb des Gehäuseblocks (4) ein die Einströmöffnung (5) mit der Ausströmöffnung (6) verbindendes Leitungssystem in zumindest zwei, vorzugsweise übereinander angeordneten, Etagen (15,16) ausgebildet ist.

12. Anordnung nach Anspruch 11, **dadurch gekennzeichnet, dass** die Einströmöffnung (5) und die Ausströmöffnung (6) gemeinsam in einer der Etagen (15) angeordnet sind.

13. Anordnung nach Anspruch 11 oder 12 und einem der Ansprüche 4 bis 10, **dadurch gekennzeichnet, dass** die Bypassleitung (2) und das Schaltorgan (7) gemeinsam in einer der Etagen (15) angeordnet sind.

14. Anordnung nach Anspruch 13, **dadurch gekennzeichnet, dass** die Einströmöffnung (5) und die Ausströmöffnung (6) und die Bypassleitung (2) und das Schaltorgan (7) gemeinsam in einer Etage (15) angeordnet sind.

15. Anordnung nach einem der Ansprüche 11 bis 14, **dadurch gekennzeichnet, dass** die Durchflussmesseinrichtung (1), vorzugsweise gemeinsam mit einem in einer Zusatzbypassleitung (12) angeordneten Überdruckventil (14), in einer anderen Etage (16) angeordnet ist als die Einströmöffnung (5) und/oder die Ausströmöffnung (6) und/oder die Bypassleitung (2) und/oder das Schaltorgan (7).
